# EUROPEAN PATENT SPECIFICATION

(11) **EP 3 919 785 B1**
(45) Date of publication and mention of the grant of the patent: **23.08.2023**
(21) Application number: 21177405.4
(22) Date of filing: 02.06.2021
(51) Int. Cl.: F16J 15/06, F16J 15/10, F16J 15/12, F16J 15/3208

(54) **SEAL ASSEMBLY AND MANUFACTURING METHOD THEREOF**
DICHTUNGSANORDNUNG UND HERSTELLUNGSVERFAHREN DAFÜR
ENSEMBLE JOINT ET SON PROCÉDÉ DE FABRICATION

(30) Priority: 05.06.2020 US 202063035238 P
(43) Date of publication of application: 08.12.2021
(73) Proprietor: Trelleborg Sealing Solutions U.S., Inc., Fort Wayne, IN 46803 (US)
(72) Inventor: Nichols, Robert, Sturbridge, 01566 (US)
(74) Representative: Kohler Schmid Möbus Patentanwälte

(56) References cited:
- DE-A1- 2 724 790
- GB-A- 2 083 575
- US-A1- 2004 256 811
- US-A1- 2020 118 906

## Description

### Cross Reference To Related Application

This is a non-provisional application based upon U.S. provisional patent application serial no. 63/035,238, entitled "SEAL ASSEMBLY AND MANUFACTURING METHOD THEREOF", filed June 05, 2020.

### BACKGROUND OF THE INVENTION

### 1. Field of the Invention

The present invention relates to seals, and, more particularly, to a spring energized elastomeric seal.

### 2. Description of the Related Art

Conventional methods of forming a seal result in inexact manufacture, fairly heavyweight product, poor performance and difficulty in producing complex designs. GB 2083575 A discloses a method for assembling a seal assembly and a seal assembly according to the preamble of claim 7.

### SUMMARY OF THE INVENTION

The present invention provides a manufacturing process for a spring-energized elastomeric seal, such as a fabric/silicone airframe seal with the internal spring tube. The spring is retained or preset in a particular shape by using a Paraplast^{®} mandrel before the exterior seal material is bonded onto or around the spring. In other words, the manufacturing method is a fusible or lost core molding process with the addition of a spring which is preset in the core. The method generally includes three main steps: molding a two-part spring and core material, molding the seal by wrapping rubber, fabric, and silicone layers around the spring and core material combination, and removing the core material so that the spring is left behind within a cavity of the layered seal. The step of molding the spring and core material includes the substeps of creating a salt mold, from melted blue temp salt #430, laying the spring in the cavity in the mold, clamping the mold with the spring therein, and pouring Paraplast^{®} into the mold to form the Paraplast^{®} mandrel and spring core. Lastly, the mold is allowed to cool and the two-part core is removed from the mold. It is noted that the spring is not entirely covered by the core material; or in other words, the spring, or at least a portion thereof, resides on the exterior or outside of the two-part core. In this regard, the spring is retained or preset in a desired, and typically complex, shape. The step of removing the core material may include the substeps of dissolving or curing the entire seal so that the salt and/or Paraplast^{®} core material is removed and the spring is left behind.

The invention in one form is directed to a spring that is a coil or tube spring.

The invention in another form is directed to the seal having any desired cross-section, such as an Omega or "P" cross-section.

An advantage of the present invention is a lost core molding process with the spring being preset in the core, which provides for more exact manufacture, leading to lighter weight, higher performance and ability to make complex designs

Another advantage is the seal may include multiple layers of rubber and fabric that are held together with silicone, any desired materials in the layers and any desired shape and size.

An aspect of the invention relates to a method for assembling a seal assembly, comprising:
providing a seal, a biasing member in a shape of a spring structure, and a core material, the seal including a plurality of material layers;
molding a core, the core including the spring structure and the core material, the core material being configured for temporarily retaining the spring structure;
applying the plurality of material layers onto the core for forming the seal onto the core; and
removing the core material such that only the spring structure is housed within the seal.

The removing the core material can further comprise dissolving the seal so that the core material is removed and only the spring structure remains.

The core material can further comprise a wax.

The spring structure is not entirely covered by the core material.

In an embodiment of the method, a portion of the spring structure does not reside on an exterior or outside of the core material.

Molding the spring structure and the core material can further comprise creating a salt mold, from melted blue temp salt #430, laying the spring structure in a cavity in the salt mold, clamping the salt mold with the spring structure therein, and pouring a polyisobutylene mixture into the salt mold to form a polyisobutylene mixture mandrel and spring structure.

Another aspect of the invention relates to a seal assembly, comprising:
a seal defining a housing; and
an inner biasing member housed within the seal, the inner biasing member being configured to be pre-shaped in a core such that the inner biasing member has a shape which corresponds to a shape of the seal.

The inner biasing member can further comprise a spring.

The seal can have a substantially "P"-shaped cross-section having a closed loop, wherein the inner biasing member is located within the closed loop.

The seal assembly can further comprise insulating material being housed within the inner biasing member, the insulating material acting as a thermal barrier to protect the inner biasing member and the seal from heat.

The seal can be bonded onto the inner biasing member.

The seal assembly can be in a form of an airframe seal assembly which seals various components within an aircraft engine.

Another aspect of the invention relates to a method for assembling a seal assembly, comprising:
presetting a biasing member in a temporary core material; and
performing a lost core molding process with the biasing member being preset in the temporary core material.

The method can comprise creating a mold, such as a salt mold with two corresponding halves.

Presetting the biasing member can further comprise laying the biasing member within a pre-shaped cavity of one of the two corresponding halves of the mold, and clamping the two corresponding halves of the mold together with the biasing member.

The lost core molding process can further comprise adding the temporary core material to the mold to form a temporary core mold that temporarily retains a shape of the biasing member, forming a two-part core.

The lost core molding process can further comprises after the mold has cooled, then removing the two-part core from the mold, thereupon, the temporary core material serves as a removable mandrel such that the biasing member is retained in a final shape.

Removing the two-part core from the mold can further comprise removing preformed core material so that only the biasing member is left behind within the seal assembly.

The temporary core material can comprise a polyisobutylene mixture.

The biasing member can comprise a spring.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is an isometric diagram of a spring-energized elastomeric seal assembly, according to an embodiment.
Fig. 2 is an isometric diagram of a biasing member of an elastomeric seal assembly, according to an embodiment.
Fig. 3 is an isometric diagram of a spring-energized elastomeric seal assembly, according to an embodiment.
Fig. 4 is a flowchart of a method for assembling either spring-energized elastomeric seal, according to an embodiment.
Fig. 5 is a flowchart of a method for assembling the spring-energized elastomeric seal assembly in Fig. 1 and the spring-energized elastomeric seal assembly in Fig 2.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

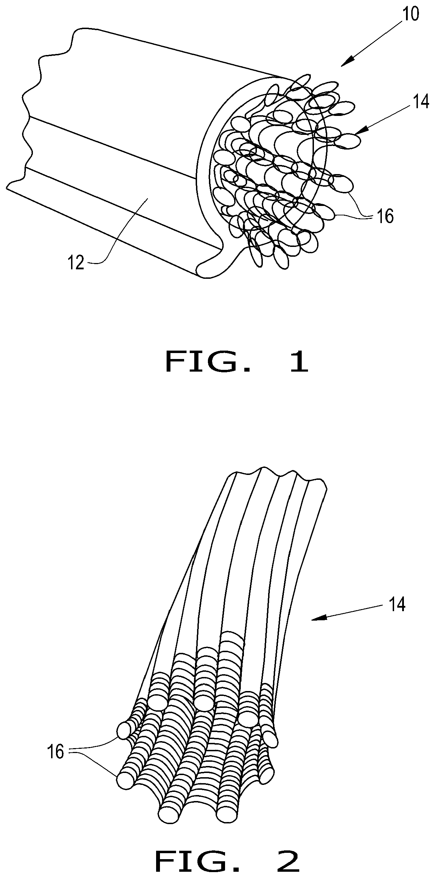

Referring now to the drawings, and more particularly to Figs. 1-2, there is shown an embodiment of a spring-energized elastomeric seal assembly 10, such as an airframe seal assembly. The spring-energized elastomeric seal assembly 10 may generally include a hallowed seal 12 and an inner or core biasing member 14 housed within the seal 12. Due to the biasing member 14, which internally supports the seal 12, the seal 12 may maintain its desired performance characteristics, e.g. resiliency, at high operating temperatures. As used herein, high operating temperatures may refer to temperatures which are greater than 315 degrees Celsius (600 degrees Fahrenheit).

The spring-energized elastomeric seal assembly 10 may be used in any desired industry. For example, the spring-energized elastomeric seal assembly 10 may be used in the aerospace industry. The spring-energized elastomeric seal assembly 10 can be in the form of an airframe seal assembly which seals various components within an aircraft engine. Even under the high operating temperatures of an aircraft engine, the spring-energized elastomeric seal assembly 10, which operates as an airframe seal assembly, will maintain is desired resiliency.

The seal 12 may be considered an outer shell 12 as it defines a housing for the inner biasing member 14. The seal 12 may include multiple layers of rubber and fabric that are held together with silicone. However, the seal 12 may comprise any desired material. The seal 12 may have any desired shape and size. For instance, the seal 12 may have an "omega"-shaped cross-section. Alternatively, the seal 12 may have a substantially "P"-shaped cross-section, wherein the inner biasing member 14 is located within the closed loop of the "P". As can be appreciated, the seal 12 may be coated with an outer protective coating, such as an elastomer-based coating, a silica-based coating, or any other desired coating.

The inner biasing member 14 may be located and housed within an internal space within the seal 12. The inner biasing member 14 may be in the form of a spring structure 14 that internally supports the whole body of the seal 12. The spring structure 14 acts as the primary resilient element for the seal 12. The spring structure 14 may be composed of multiple strands or wires 16 that are knitted together to form multiple interconnected loops (Fig. 2). Thereby, the spring structure 14 may define a meshed and resilient internal support member for counteracting the various external forces acting upon the seal 12. The strands 16 of the spring structure 14 may comprise any desired material such as a metal, ceramic, and/or suitable elastic material. The spring structure 14 may have any desired shape and size, which may or may not correspond to the shape and size of the seal 12. The spring structure 14 may be in the form of a spring tube. Additionally, the spring structure 14 may be in the form of an open-sided structure, for example a C-shaped structure. It is conceivable that the inner biasing member 14 may be in the form of a coil spring. It should also be appreciated that the spring structure 14 may or may not have a hollow center. For example, the spring structure 14 may have a non-hollow honeycomb structure. The honeycomb structure may be a non-wire type spring, such as a suitable elastic material, which is sufficiently flexible. As can be appreciated, the spring structure 14 may be optimized for altering its various performance characteristics as desired. For instance, the loop density, the number of individual loops along the circumference, the loop length, and/or the wire diameter may be altered to achieve a desired set of performance characteristics.

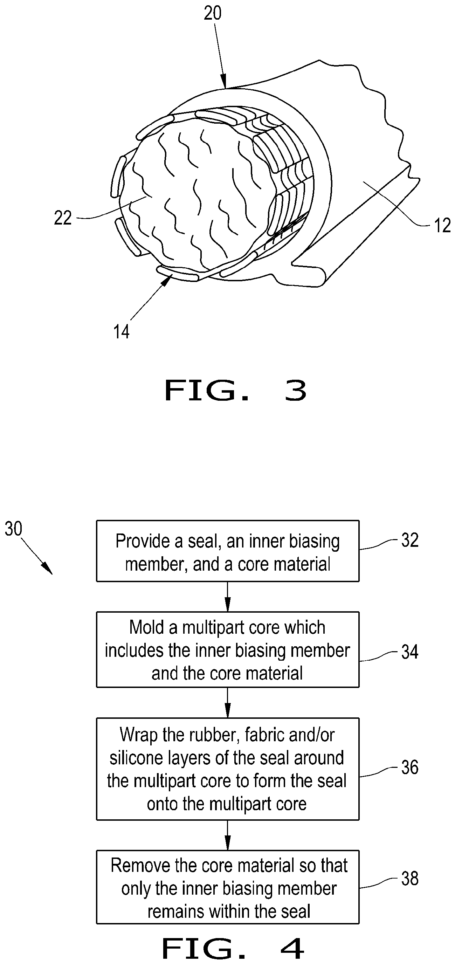

Referring now to Fig. 3, there is shown another embodiment of a spring-energized elastomeric seal assembly 20. The spring-energized elastomeric seal assembly 20 may be substantially similar to the spring-energized elastomeric seal assembly 10, as discussed above, except that the spring-energized elastomeric seal assembly 20 additionally includes an insulating material 22 that is located within the spring structure 14. Like elements between the spring-energized elastomeric seal assembly 10 and spring-energized elastomeric seal assembly 20 have been identified with like reference characters.

The insulating material 22 may be housed within the spring structure 14. The insulating material 22 may act as a thermal barrier to protect the spring structure 14 and/or the seal 12 from heat. The insulating material 22 may be composed of any desired material, such as wool, ceramic, or other materials.

Referring now to Fig. 4, there is shown a flowchart of a method 30 for assembling the spring-energized elastomeric seal assembly 10 in Fig. 1 and the spring-energized elastomeric seal assembly 20 in Fig 2. By way of example only, the method 30 is discussed herein with reference to the spring-energized elastomeric seal 10. The method 30 may initially include providing a seal 12, which includes multiple material layers, a spring structure 14, and a core material which forms a temporary core (at block 32). The method 30 may include molding a core, such a multipart core (at block 34). The multipart core includes the spring structure 14 and the core material that forms the temporary core. This multipart core may be considered a fusible or lost core for temporarily retaining the spring structure 14. In other words, the core material, which forms the temporary core, retains or pre-shapes the spring structure 14 in a desired shape before the exterior seal material of the seal 12 is bonded onto or around the spring structure 14.

Thus, the initial core molding procedure serves to pre-shape the spring structure 14 so that the spring structure 14 may be formed into a complex shape without regard of subsequently forming and/or fitting the spring structure 14 relative to the seal 12. The molding of the multipart core may include creating a mold, such as a salt mold with two corresponding halves, laying the spring structure 14 within a pre-shaped cavity of one of the halves of the mold, and clamping the halves of the mold together with the spring structure 14 therein.

Next, the molding of the multipart core may include adding the temporary core material to the mold to form the temporary core mold that temporarily retains the shape of the spring structure 14. It should be appreciated that temporary core material may comprise a polyisobutylene mixture, such as Paraplast^{®}. However, the core material may comprise any desired material, such as a removable wax. Thereafter, the mold may be allowed to cool, and the two-part core can be removed from the mold. At this stage, the core material serves as a removable mandrel such that the spring structure 14 is retained in its final shape. It is noted that the spring structure 14 may not be entirely covered by the core material; or in other words, the spring structure 14, or at least a portion thereof, may reside on the exterior or outside of the core material. Paraplast^{®} is a mixture of 98% or more of highly purified paraffin with the remaining mixture being Polyisobutylene. Polyisobutylene (C₄H₈)ₙ is a synthetic elastomer (a natural or synthetic polymer exhibiting elastic properties) with strong oxygen barrier properties. Polyisobutylene is generally colorless but may have a light yellow color and it is generally odorless and tasteless although it may have a slight odor. Polyisobutylene is the homopolymer of isobutylene

Next, the method 30 may include applying the rubber, fabric, and/or silicone layers onto the multipart core mold to form the seal 12 thereon (at block 36). The step of applying the layers onto the multipart core mold may include any desired application process, such as wrapping, tape laying, oriented fiber injection molding, etc. Thus, the seal 12 at least partially takes on the preformed shape of the spring structure 14.

Thereafter, the method 30 may include removing the preformed core material so that only the spring structure 14 is left behind within the internal space of the seal 12 (at block 38). The process of removing the temporary core material may include dissolving, mechanical shock/rupture, electrical or magnetic wave changes, and/or curing the spring-energized elastomeric seal assembly 10, which operates as an airframe seal assembly 10. Thereby, once the salt of the mold and/or Paraplast^{®} temporary core is removed, spring structure 14 is left behind within the seal 12. If the spring-energized elastomeric seal assembly has insulation, such as the insulating material 22 of the spring-energized elastomeric seal assembly 20, then the method 30 may additionally include a step of inserting the insulating material 22 into the open cavity of the spring structure 14.

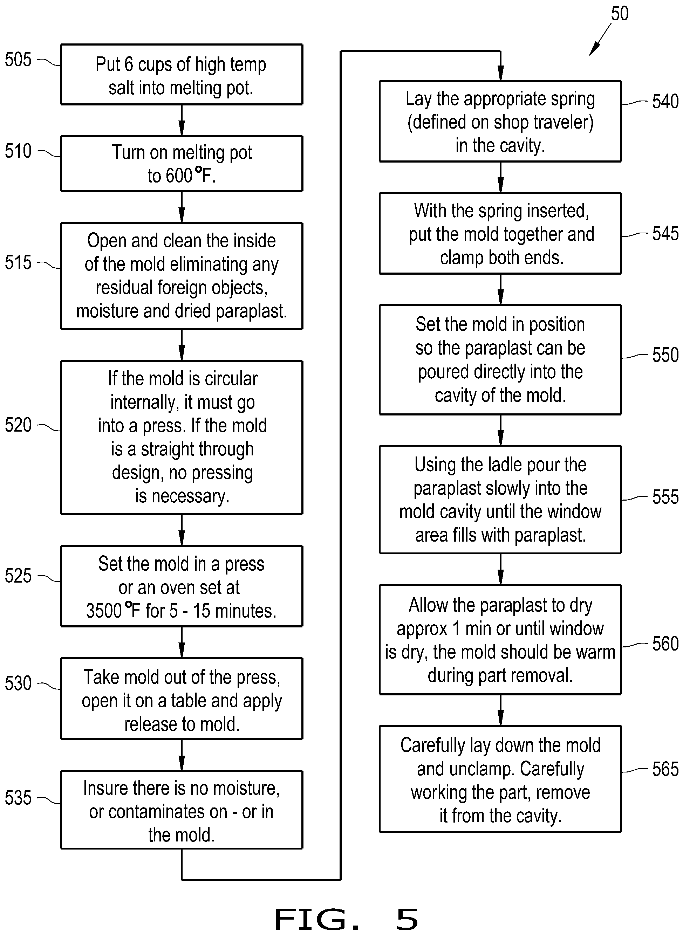

Referring now to Fig. 5, there is shown a flowchart of a method 50 for assembling the spring-energized elastomeric seal assembly 10 in Fig. 1 and the spring-energized elastomeric seal assembly in Fig 2. By way of example only, the method 50 is discussed herein with reference to the spring-energized elastomeric seal 10. The method 50 may initially include putting 6 cups of high temp salt into melting pot 505, then turn on melting pot to 315°C (600°F) 510, then open and clean the inside of the mold eliminating any residual foreign objects, moisture and dried Paraplast^{®} 515. If the mold is circular internally, it must go into a press. If the mold is a straight through design, no pressing is necessary 520. Then set the mold in a press or an oven set at 176°C (350°F) for 5 to 15 minutes 525, and take mold out of the press, open it on a table and apply release to mold 530, ensure there is not moisture or contaminants on or in the mold 535, then lay the appropriate spring (defined on shop traveler) in the cavity 540 and with the spring inserted, put the mold together and clamp both ends 545, set the mold in position so the Paraplast^{®} can be poured directly into the cavity of the mold 550, the using the ladle pour the Paraplast^{®} slowly into the mold cavity until the widow area fills with Paraplast^{®} 555, allow the Paraplast^{®} to dry approx. 17 min or until window is dry, the mold should be warm during part removal 560 and carefully lay down the mold and unclamp. Carefully working the part, remove it from the cavity 565.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method for assembling a seal assembly, comprising:
providing a seal, a biasing member in a shape of a spring structure, and a core material, the seal including a plurality of material layers;
molding a core, the core including the spring structure and the core material, the core material being configured for temporarily retaining the spring structure;
applying the plurality of material layers onto the core for forming the seal onto the core; and
removing the core material such that only the spring structure is housed within the seal.

2. The method of claim 1, wherein the removing the core material further comprises dissolving the seal so that the core material is removed and only the spring structure remains.

3. The method of claim 1 or 2, wherein the core material further comprises a wax.

4. The method of at least one of the preceding claims, wherein the spring structure is not entirely covered by the core material.

5. The method of at least one of the preceding claims, wherein a portion of the spring structure does not reside on an exterior or outside of the core material.

6. The method of at least one of the preceding claims, wherein molding the spring structure and the core material further comprises creating a salt mold, from melted blue temp salt #430, laying the spring structure in a cavity in the salt mold, clamping the salt mold with the spring structure therein, and pouring a polyisobutylene mixture into the salt mold to form a polyisobutylene mixture mandrel and spring structure.

7. A seal assembly, comprising:
a seal defining a housing; and
an inner biasing member housed within the seal, the inner biasing member being configured to be pre-shaped in a core such that the inner biasing member has a shape which corresponds to a shape of the seal, wherein the inner biasing member is in the form of a spring structure that internally supports the whole body of the seal, **characterised in that** the spring structure has multiple strands or wires that are knitted together to form multiple interconnected loops.

8. The seal assembly of claim 7, wherein the inner biasing member further comprises a spring.

9. The seal assembly of claim 7 or 8, wherein the seal has a substantially "P"-shaped cross-section having a closed loop, wherein the inner biasing member is located within the closed loop.

10. The seal assembly of at least one of claims 7 to 9, further comprising insulating material being housed within the inner biasing member, the insulating material acting as a thermal barrier to protect the inner biasing member and the seal from heat.

11. The seal assembly of at least one of claims 7 to 10, wherein the seal is bonded onto the inner biasing member.

12. The seal assembly of at least one of claims 7 to 11, wherein the seal assembly is in a form of an airframe seal assembly which seals various components within an aircraft engine.

## Patentansprüche

1. Verfahren zum Zusammenbau einer Dichtungsanordnung, umfassend:
Bereitstellen einer Dichtung, eines Vorspannelements in Form einer Federstruktur und eines Kernmaterials, wobei die Dichtung eine Vielzahl von Materialschichten aufweist;
Formen eines Kerns, wobei der Kern die Federstruktur und das Kernmaterial enthält, wobei das Kernmaterial so konfiguriert ist, dass es die Federstruktur vorübergehend beibehält;
Aufbringen der Vielzahl von Materialschichten auf den Kern, um die Dichtung auf dem Kern zu bilden; und
Entfernen des Kernmaterials, so dass nur die Federstruktur innerhalb der Dichtung untergebracht ist.

2. Verfahren nach Anspruch 1, wobei das Entfernen des Kernmaterials ferner das Auflösen der Dichtung umfasst, so dass das Kernmaterial entfernt wird und nur die Federstruktur zurückbleibt.

3. Verfahren nach Anspruch 1 oder 2, wobei das Kernmaterial ferner ein Wachs umfasst.

4. Verfahren nach mindestens einem der vorhergehenden Ansprüche, wobei die Federstruktur nicht vollständig von dem Kernmaterial bedeckt ist.

5. Verfahren nach mindestens einem der vorhergehenden Ansprüche, wobei sich ein Teil der Federstruktur nicht an einer Außenseite oder außerhalb des Kernmaterials befindet.

6. Verfahren nach mindestens einem der vorhergehenden Ansprüche, wobei das Formen der Federstruktur und des Kernmaterials ferner das Herstellen einer Salzform aus geschmolzenem blauem Härtesalz #430, das Legen der Federstruktur in einen Hohlraum in der Salzform, das Festklemmen der Salzform mit der Federstruktur darin, und Gießen einer Polyisobutylenmischung in die Salzform umfasst, um einen Dorn aus einer Polyisobutylenmischung und eine Federstruktur zu bilden.

7. Dichtungsanordnung, umfassend:
eine ein Gehäuse definierende Dichtung, und
ein inneres Vorspannelement, das in der Dichtung untergebracht ist, wobei das innere Vorspannelement so konfiguriert ist, dass es in einem Kern vorgeformt ist, so dass das innere Vorspannelement eine Form hat, die einer Form der Dichtung entspricht, wobei das innere Vorspannelement die Form einer Federstruktur hat, die intern den ganzen Dichtungskörper stützt,
**dadurch gekennzeichnet,**
**dass** die Federstruktur mehrere Stränge oder Drähte aufweist, die miteinander verknüpft sind, um mehrere miteinander verbundene Schleifen zu bilden.

8. Dichtungsanordnung nach Anspruch 7, wobei das innere Vorspannelement ferner eine Feder umfasst.

9. Dichtungsanordnung nach Anspruch 7 oder 8, wobei die Dichtung einen im Wesentlichen "P"-förmigen Querschnitt mit einer geschlossenen Schleife aufweist, wobei das innere Vorspannelement innerhalb der geschlossenen Schleife angeordnet ist.

10. Dichtungsanordnung nach mindestens einem der Ansprüche 7 bis 9, die ferner ein Isoliermaterial umfasst, das in dem inneren Vorspannelement untergebracht ist, wobei das Isoliermaterial als Wärmedämmung wirkt, um das innere Vorspannelement und die Dichtung vor Wärme zu schützen.

11. Dichtungsanordnung nach mindestens einem der Ansprüche 7 bis 10, wobei die Dichtung auf das innere Vorspannelement verbunden ist.

12. Dichtungsanordnung nach mindestens einem der Ansprüche 7 bis 11, wobei die Dichtungsanordnung in Form einer Flugwerk-Dichtungsanordnung vorliegt, die verschiedene Komponenten innerhalb eines Flugzeugtriebwerks abdichtet.

## Revendications

1. Procédé pour assembler un ensemble de joint, comprenant :
la fourniture d'un joint, d'un élément de sollicitation par poussée qui présente la forme d'une structure de ressort, et d'un matériau de noyau, le joint incluant une pluralité de couches de matériau ;
le moulage d'un noyau, le noyau incluant la structure de ressort et le matériau de noyau, le matériau de noyau étant configuré pour retenir temporairement la structure de ressort ;
l'application de la pluralité de couches de matériau sur le noyau pour former le joint sur le noyau ; et
l'enlèvement du matériau de noyau de telle sorte que seulement la structure de ressort soit logée à l'intérieur du joint.

2. Procédé selon la revendication 1, dans lequel l'enlèvement du matériau de noyau comprend en outre la dissolution du joint de telle sorte que le matériau de noyau soit enlevé et que seulement la structure de ressort subsiste.

3. Procédé selon la revendication 1 ou 2, dans lequel le matériau de noyau comprend en outre une cire.

4. Procédé selon au moins l'une des revendications précédentes, dans lequel la structure de ressort n'est pas recouverte en totalité par le matériau de noyau.

5. Procédé selon au moins l'une des revendications précédentes, dans lequel une partie de la structure de ressort ne réside pas sur un extérieur ou à l'extérieur du matériau de noyau.

6. Procédé selon au moins l'une des revendications précédentes, dans lequel le moulage de la structure de ressort et du matériau de noyau comprend en outre la création d'un moule en sel, à partir de sel fondu à température bleue # 430, le fait d'étendre la structure de ressort dans une cavité dans le moule en sel, la fixation du moule en sel à l'aide de la structure de ressort à l'intérieur et le versement d'un mélange de polyisobutylène à l'intérieur du moule en sel pour former une structure de mandrin et de ressort en mélange de polyisobutylène.

7. Ensemble de joint, comprenant :
un joint qui définit un logement ; et
un élément de sollicitation par poussée interne qui est logé à l'intérieur du joint, l'élément de sollicitation par poussée interne étant configuré pour être préformé selon un noyau de telle sorte que l'élément de sollicitation par poussée interne présente une forme qui correspond à une forme du joint, dans lequel l'élément de sollicitation par poussée interne présente la forme d'une structure de ressort qui supporte de façon interne l'intégralité du corps du joint ;
**caractérisé en ce que** la structure de ressort comporte de multiples brins ou fils qui sont tricotés ou tissés ensemble afin de former de multiples boucles interconnectées.

8. Ensemble de joint selon la revendication 7, dans lequel l'élément de sollicitation par poussée interne comprend en outre un ressort.

9. Ensemble de joint selon la revendication 7 ou 8, dans lequel le joint présente une section en coupe transversale sensiblement en forme de P qui comporte une boucle fermée, et dans lequel l'élément de sollicitation par poussée interne est localisé à l'intérieur de la boucle fermée.

10. Ensemble de joint selon au moins l'une des revendications 7 à 9, comprenant en outre un matériau isolant qui est logé à l'intérieur de l'élément de sollicitation par poussée interne, le matériau isolant jouant le rôle de barrière thermique pour protéger de la chaleur l'élément de sollicitation par poussée interne et le joint.

11. Ensemble de joint selon au moins l'une des revendications 7 à 10, dans lequel le joint est lié sur l'élément de sollicitation par poussée interne.

12. Ensemble de joint selon au moins l'une des revendications 7 à 11, dans lequel l'ensemble de joint se présente sous la forme d'un ensemble de joint de cellule d'avion ou de fuselage qui assure l'étanchéité de divers composants à l'intérieur d'un moteur d'aéronef.
